## Europäisches Patentamt

## European Patent Office

## Office européen des brevets

(19)

(11) Veröffentlichungsnummer: **0 305 637 B1**

(12) **EUROPÄISCHE PATENTSCHRIFT**

(45) Veröffentlichungstag der Patentschrift:
19.12.90

(51) Int. Cl.⁵: **G01N 29/04**

(21) Anmeldenummer: **88106101.4**

(22) Anmeldetag: **16.04.88**

(54) Verfahren und Vorrichtung zur Ankopplung eines Ultraschall Prüfkopfes an einen Prüfling.

(30) Priorität: **03.08.87 DE 3725658**

(43) Veröffentlichungstag der Anmeldung:
**08.03.89 Patentblatt 89/10**

(45) Bekanntmachung des Hinweises auf die Patenterteilung:
**19.12.90 Patentblatt 90/51**

(84) Benannte Vertragsstaaten:
**AT BE CH DE ES FR GB GR IT LI LU NL SE**

(56) Entgegenhaltungen:
**EP-A-0 119 096**

**PRODUCT ENGINEERING, Band 40, Nr. 25, 15. Dezember 1969, Seite 92;"Flaw sweeper for plates works with multiple transducers"**

(73) Patentinhaber: **Hoesch Aktiengesellschaft, Eberhardstrasse 12, D-4600 Dortmund 1(DE)**

(72) Erfinder: **Kliesch, Wilfried, Dipl.-Ing., Elisabethstrasse 5, D-5800 Hagen(DE)**

## Beschreibung

Die Erfindung betrifft ein Verfahren gemäß dem Oberbegriff des Patentanspruchs 1.

Zur direkten Ankopplung von Ultraschallschwingungen aussendenden Prüfköpfen oder Schwingern an ein zu prüfendes Werkstück mittels eines flüssigen Koppelmediums existieren im Stand der Technik zahlreiche Verfahren, welche im wesentlichen in zwei Kategorien eingeordnet werden können.

Zum einen sind dies die Verfahren, die mit einem aus einer Düse austretenden Freistrahl arbeiten, der vor seiner eigentlichen Existenz als freier Strahl, d. h. vor Austritt aus der Düse, mit dem Ultraschall-Prüfkopf oder -Schwinger in Verbindung steht bzw. ihn umspült und nach Austritt aus der Düse als "Schallkanal" dient (EP-A 119 096).

Um Reflexionen an den freien Wänden des Freistrahles zu vermeiden, ist die Schallrichtung im Freistrahl notwendigerweise parallel zur Freistrahlachse.

Darüber hinaus wird bei der Freistrahltechnik die freie Strahlströmung laminarisiert um auch Reflexionen zu vermeiden, die durch Dichteschwankungen in einem turbulenten Strahl entstehen könnten.

Durch diese Eigenarten des Freistrahls entsteht der Nachteil, daß die Einschallung immer senkrecht zur Prüflingsoberfläche erfolgt. Eine winklige Einschallung ist, abgesehen von schräg auf die Werkstückoberfläche gerichteten und bezüglich der Einkopplung instabilen Freistrahlen, nur mit Verfahren möglich, die mit Hilfe vieler gleichgerichteter paralleler Freistrahlen unter Ausnutzung einer einstellbaren Phasenlage der Schwinger (phased array) eine Abwinklung erreichen. Solche Verfahren, wie sie zum Beispiel in der DE-OS 2 916 933 beschrieben sind, besitzen jedoch den Nachteil eines sehr großen Strahlkegels, sind mit ihren vielen Schwingern zudem aufwendig konstruiert und darüber hinaus nicht für die Prüfung dünner Wände geeignet.

Bekanntermaßen ermöglicht somit die normale senkrecht einschallende Freistrahlankopplung nur eine Wanddickenmessung bzw. eine Prüfung auf annähernd parallel zur Oberfläche orientierte Schalen und Dopplungen im Werkstoff.

Für die Prüfung von beispielsweise Schweißnähten an längsnahtgeschweißten Rohren können daher Freistrahlankopplungen in der bekannten Art nicht angewandt werden.

Auf der anderen Seite existieren Verfahren, die mit einer sogenannten Wasserkammer arbeiten. Hierbei ist der Prüfkopf - wie zum Beispiel in der DE PS 971 832, Figur 5, gezeigt - in einer Wasserkammer angeordnet, die zum Werkstück hin geöffnet ist und über eine in die Kammer führende Wasserzufuhr verfügt. Die Wasserabfuhr geschieht entweder durch Spalte zwischen Wasserkammer und Werkstückoberfläche und/oder durch Wasserabführungen in der Kammer.

Einen Nachteil bilden hierbei die insbesondere bei nicht allzu starkem Druck der Wasserzufuhr immer wieder auftretenden Luftblasen in der Kammer, die zu ungewollten Reflexionen führen.

Ein weiterer wesentlich größerer Nachteil liegt jedoch darin, daß der Aufbau eines stationären Prüfzustandes sehr lang dauert, da nach dem Aufsetzen der Kammer auf die Prüflingsoberfläche zunächst die Wasserkammer gefüllt, durch Strömung oder andere Mittel entlüftet und dann in Bewegung gesetzt werden muß.

Bei den heutigen schnellen automatischen Prüfungen - zum Beispiel bei der Schweißnahtprüfung von Rohren - bleibt somit an jedem Rohranfang und -ende ein ungeprüftes bzw. nicht sicher geprüftes Teilstück, auf welchem sich der stationäre Prüfzustand aufbaut oder - am Rohrende - abbaut.

Diese Teilstücke müssen dann per Hand nachgeprüft werden, was eine extreme Verlängerung des Prüfprozesses bedeutet.

Weiterhin hat die Wasserkammer den Nachteil, daß schon bei geringer Oberflächenunebenheit des Prüflings der Spalt zwischen Wasserkammer und Werkstück zu groß werden kann und die Kammer sich entleert bzw. Luft saugt, so daß eine Prüfung nicht mehr sichergestellt ist. Dies ist besonders bei größeren Kammern mit mehreren Prüfköpfen der Fall.

Ferner ist aus Procuct Engin., 40 (1969) 25, S. 92 ein Verfahren zum Auffinden von Fehlern in Stahlplatten bekannt. Hierbei ruht der Prüfkopf auf einer in einem Tank eingeschlossenen Wassersäule, der unten mit einem relativ dünnen Gummiboden abgeschlossen ist. Der Raum zwischen diesem Boden und der der Prüflingsoberfläche wird mit einem dünnen Wasserfilm gefüllt, der durch einen schräg auf die Prüflingsoberfläche neben der Prüfanordnung auf dem Prüfling auftreffenden Wasserfreistrahl gebildet wird.

Der Erfindung lag daher die Aufgabe zugrunde, ein Kopplungsverfahren bereitzustellen, das bei einer automatischen stückweisen Prüfung bei jedem Stück unter Beibehaltung der Prüfgeschwindigkeit sofort eine stationäre Ankopplung der Prüfköpfe gewährleistet, beliebige Arten von Einschallwinkeln zuläßt, unempfindlich gegen Unebenheiten der Oberfläche ist und damit eine manuelle Nachprüfung von Endbereichen vermeidet.

Gelöst wird die Aufgabe durch die Merkmale des Anspruchs 1.

Weiterbildende Merkmale sind in den abhängigen Ansprüchen erfaßt.

Gleichermaßen wird eine Vorrichtung offenbart, die zur Durchführung des erfindungsgemäßen Verfahrens geeignet ist.

Vorteilhafterweise wird die Schicht aus Kopplungsmedium zwischen der Schallaustrittsfläche und der Prüflingsoberfläche mittels eines separaten, seitlich vom Prüfkopf angeordneten Freistrahles aufgebaut, der nicht selbst als Schallkanal dient. Der Freistrahl braucht daher weder laminarisiert zu sein, noch muß er mit Hilfe komplizierter Strömungskanalformen mit dem Prüfkopf in Verbindung stehen. Der Freistrahl verläuft in einer Ebene die quer zur Prüfspur steht und die die Mittelachse der Schallaustrittsfläche des Prüfkopfes beinhaltet und ist auf den im Prüfzustand vorhandenen Spalt zwischen Schallaustrittsfläche und Prüflingsoberfläche gerichtet. Die Ausbildung und die Richtungsvorgabe geschieht durch eine zum Prüfkopf geneigte Freistrahleinrichtung.

Der Vorteil einer solchen Anordnung des Freistrahles liegt darin, daß in dem Augenblick, in dem der Anfang des Werkstückes die Mitte der Schallaustrittsfläche erreicht, schon eine stationäre Schicht von Koppelmedium im Spalt zwischen Schallaustrittsfläche und Prüflingsoberfläche aufgebaut und solange vorhanden ist, bis das Ende des Werkstücks die Mitte der Schallaustrittsfläche erreicht.

Die Schallaustrittsfläche des Prüfkopfes ist im Bezug auf die dem Prüfling zugewandten Unterseite der Halteeinrichtung erhaben ausgebildet.

Hierdurch bilden die Schallaustrittsfläche und die Prüflingsoberfläche den geringsten Abstand - mit Ausnahme der Rollen - zwischen Teilen der Prüfvorrichtung und Teilen des Prüflings.

Damit existiert keine Kammer um die Schallaustrittsfläche, sondern nur zwei im wesentlichen parallel gegenüberliegende Flächen, die, sobald ein Freistrahl von normalerweise adhesiven Kopplungsmittel von der Seite zwischen sie gerichtet wird, diesen in eine Spaltströmung umformen unter vollständiger Benetzung der Schallaustrittsfläche und der ihr gegenüberliegenden gleichgroßen Prüflingsoberfläche.

Die Durchschallung erfolgt nun quer zur Ausbreitungsrichtung des zu einer Spaltströmung umgeformten Freistrahles, wodurch jegliche winklige Einschallung ermöglicht wird. Durch Adhesionskräfte an den gegenüberliegenden Flächen entsteht sofort ein luftblasenfrei gefüllter Spalt und damit ein stationärer Prüfzustand.

Für den Fall, daß die Prüflingsoberfläche und die Schallaustrittsfläche nicht, wie z. B. bei der Prüfung eines mit einer Schweißnaht versehenen Bleches, grundsätzlich planparallel zueinander sind, ist es vorteilhaft, den Freistrahl nah neben den aus diesen beiden Flächen gebildeten Spaltraum, z. B. auf die Prüflingsoberfläche zu richten, so daß diese eine Leitfunktion für den Freistrahl übernimmt.

Besondere Vorzüge hat diese Ausgestaltung des Verfahrens bei der Schweißnahtprüfung von längsnahtgeschweißten Rohren. Hierbei ist der Freistrahl kurz neben die Schallaustrittsfläche auf die Prüflingsoberfläche gerichtet.

Bei nicht vorhandenem Prüfling existiert dann keine Benetzung der Schallaustrittsfläche und es entstehen daher keine irreführenden Wasserechos. Dadurch ist es nicht mehr notwendig, die Prüfung während der zwischen den einzelnen Werkstücken existierenden Leerräume auszuschalten.

Bei dem außerhalb des Spaltraumes entweder in Form eines Freistrahles oder in einer freien Strömung auf der Prüflingsoberfläche fließenden Koppelmedium besteht eine besonders vorteilhafte Ausgestaltung der Erfindung darin, daß das Koppelmedium durch Luftstrahlen begrenzt, geführt oder zerteilt wird.

Dies kann sowohl am Freistrahl, rund um die aufgebaute Spaltschicht oder bei der freien Abströmung geschehen und dient zum einem dazu, bestimmte Reflexionsstellen des Ultraschallstrahles an der Werkstoffwand innerhalb des Werkstückes wasserfrei zu halten um Auskopplungen und Doppelreflexionen zu vermeiden. Zum anderen ist hierdurch die Trennung des Koppelmediums unterschiedlicher, nah beieinanderliegender Prüfköpfe möglich, wodurch ebenfalls Fehlsignale vermieden werden. Zweckmäßigerweise sind dazu mehrere Luftstrahldüsen im Bereich des Prüfkopfes installiert.

Günstig ist es dabei, den Freistrahl in möglichst spitzem Winkel auf die Prüflingsoberfläche zu richten. Damit wird sowohl die Leitfunktion der Oberfläche verstärkt und somit ein schnelles Abströmen der Koppelflüssigkeit aus dem Prüfbereich erreicht, als auch ein niedriger Druck in den Luftstrahleinrichtungen, die das Abströmen unterstützen, benötigt.

Zweckmäßigerweise beträgt der Winkel zwischen Freistrahlachse und Prüfkopfachse zwischen 40° und 90°.

Realisiert wird dies durch eine entsprechende Neigung und Anordnung der Freistrahleinrichtung.

Bei der Verwendung mehrerer nebeneinander angeordneter Prüfköpfe zur Prüfung unterschiedlicher Fehlertypen besteht eine besondere Ausgestaltung der erfindungsgemäßen Vorrichtung darin, daß die Freistrahleinrichtung als Schlitzdüse ausgebildet ist, die über die Gesamtbreite der nebeneinanderliegenden Prüfköpfe einen Freistrahl erzeugt.

Vorteilhafterweise wird dann dieser breite Freistrahl zur Vermeidung von unerwünschten Kopplungen oder Reflexionen durch Luftstrahlen in Einzelstrahlen für jeden Prüfkopf geschnitten.

Anhand eines Ausführungsbeispieles in Form einer Ankoppelvorrichtung für die Ultraschall-Schweißnahtprüfung von längsnahtgeschweißten Rohren soll die Erfindung näher erläutert werden. Es zeigen:

Fig. 1 eine Vorderansicht der erfindungsgemäßen Ankoppelvorrichtung,

Fig. 2 eine Seitenansicht der erfindungsgemäßen Ankoppelvorrichtung,

Fig. 3 das Anwachsen der Amplitude eines Signals eines 10 % Innennutes beim Aufgleiten der Ankoppelvorrichtung auf ein Rohr.

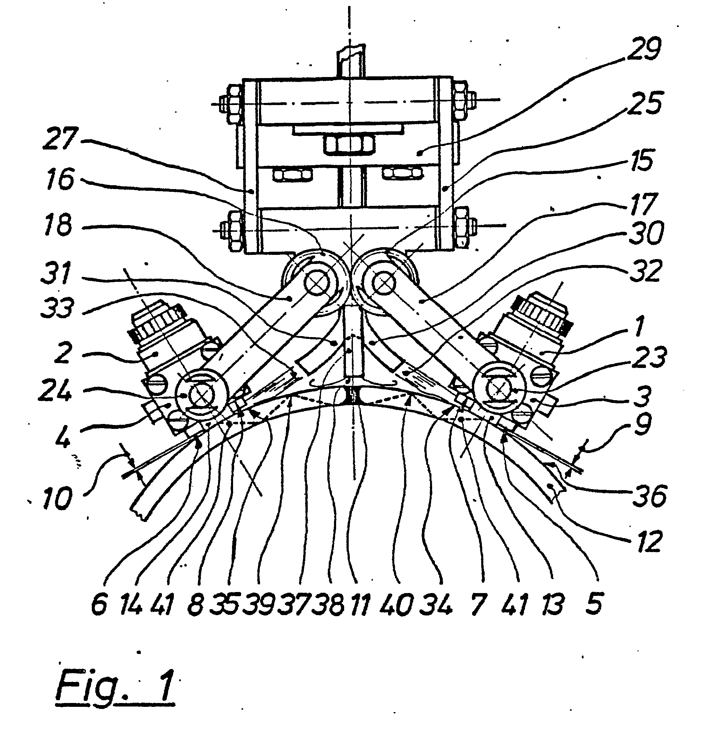

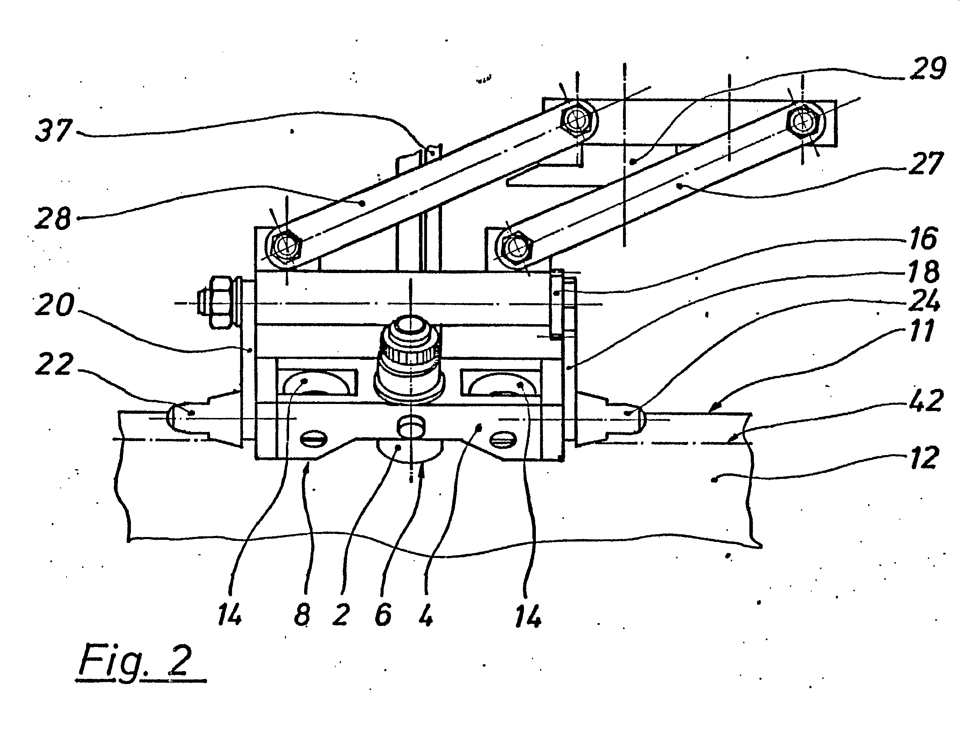

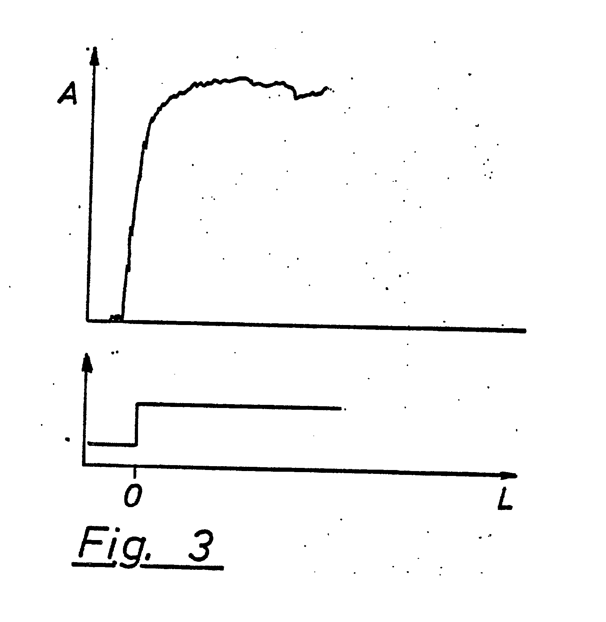

In der Fig. 1 und Fig. 2 sind zwei Prüfköpfe 1 und 2 erkennbar, welche in den Rollenwagen 3 und 4 so befestigt sind, daß die Schallaustrittsfläche 5 und 6 erhaben gegenüber den Unterseiten 7 und 8 der als Rollwagen ausgeführten Halteeinrichtungen 3 und 4 ausgebildet sind. Die Schallaustrittsflächen 5 und 6 besitzen damit die Abstände 9 und 10 zum Prüfling.

Die Vorrichtungen dienen zur Prüfung der Schweißnaht 11 eines längsnahtgeschweißten Rohres 12 auf längs der Schweißnaht orientierte Fehler. Die Rollenwagen 3 und 4 mit ihren Rollen 13 und 14 hängen an miteinander über Zahnräder 15 und 16 synchron bewegbaren Schwingen 17, 18, 19 und 20, die je nach Rohrdurchmesser eingestellt und festgeschraubt werden.

An der Vorderseite und Rückseite der Rollenwagen 3 und 4 sind jeweils Aufgleitkufen 21, 22, 23 und 24 angeschraubt, welche dazu dienen, die mittels der Parallelogrammlenker 25, 26, 27 und 28 in vertikaler Richtung bewegbaren Rollenwagen am Rohranfang auf das Rohr zu führen und am Rohrende langsam abgleiten zu lassen. Zur Begrenzung des vertikalen Ausschwingbereiches, abhängig vom Rohrdurchmesser, dient der horizontal verstellbare Anschlag 29.

Die Freistrahleinrichtungen 30 und 31, welche hier als Rohrdüsen ausgebildet sind, richten die Freistrahlen 32 und 33 des Koppelmediums auf die Spalträume 34 und 35 und koppeln dadurch die Schallaustrittsflächen 5 und 6 der Prüfköpfe 1 und 2 an die Prüflingsoberfläche 36.

Die Luftstrahleinrichtung 37 bläst einen Luftstrahl 38 auf die Prüflingsoberfläche 36 im Bereich der Schweißnaht 11.
Hierdurch wird zum einen die ungewünschte Kopplung zwischen den Freistrahlen 32 und 33 vermieden, als auch der jeweilige Freistrahl so geführt, daß die relevanten Reflexionsstellen 39 und 40 des Schallstrahles 41 außerhalb der benetzten Prüflingsoberfläche liegen, während die Prüfspur 42 abgefahren wird.

Fig. 3 zeigt das Anwachsen der Amplitude A eines 10 % Innentestfehler-Signals beim Aufgleiten der Ankoppelvorrichtung auf den Rohranfang eines Rohres der Länge L.
Man sieht deutlich, daß schon bevor die gesamte Schallaustrittsfläche 5 oder 6 des Prüfkopfes 1 oder 2 auf das Rohr 12 aufgefahren ist - d. h. schon vor dem Punkt 0 in der unteren Darstellung des Testfehlers - die Amplitude steil ansteigt und somit direkt ab Rohranfang die stationäre Erkennung des Testfehlers ermöglicht.
Eine Handnachprüfung beispielsweise der ersten 25 mm am Rohranfang kann daher entfallen.

Selbstverständlich können die beiden Prüfköpfe 1 und 2 sowohl als SE-Prüfköpfe (=Sende-Empfangs-Prüfköpfe), die ständig in einer vorbestimmten Taktfolge umgeschaltet werden, als auch als Prüfköpfe mit jeweils nur einer Funktion ausgeführt sein.

Ebenso ist es denkbar, mit nur einem SE-Prükopf und nur einer Freistrahleinrichtung so zu prüfen, daß nach Aussenden eines US-Signals auf Empfang geschaltet und das Echosignal ausgewertet wird.

## Patentansprüche

1. Verfahren zur Ankopplung mindestens eines Ultraschallprüfkopfes (1, 2) an einen Prüfling (12) mittels eines flüssigen Koppelmediums bei der stückweisen automatischen Ultraschallprüfung von Bändern, Tafeln oder Rohren, wobei der Prüfkopf durch eine Halteeinrichtung in konstantem Abstand zum Prüfling auf einer Prüfspur (42) geführt wird, dadurch gekennzeichnet, daß mit Hilfe eines separaten, seitlich vom Prüfkopf (1, 2) angeordneten, gegen diesen geneigten in einer quer zur Prüfspur (42) und die Mittelachse der Schallaustrittsfläche (5, 6) des Prüfkopfs beinhaltenden Ebene ausgebildeten und im wesentlichen auf den Spaltraum (34, 35) zwischen Schaltaustrittsfläche des Prüfkopfs und Prüflingsoberfläche (36) gerichteten Freistrahles (32, 33) des Koppelmediums die einzige Schicht aus Koppelmedium im Spaltraum (34, 35) zwischen Schallaustrittsfläche (5, 6) des Prüfkopfs (1, 2) und Prüflingsoberfläche (36) aufgebaut wird.

2. Verfahren nach Anspruch 1, dadurch gekennzeichnet, daß der Freistrahl (32, 33) des Koppelmediums und/oder eine Koppelmediumsschicht mittels eines oder mehrerer Luftstrahlen (38) begrenzt, geführt oder zerteilt wird bzw. werden.

3. Verfahren nach Anspruch 1 oder 2, dadurch gekennzeichnet, daß der Freistrahl (32, 33) auf die Prüflingsoberfläche (36) nahe neben den aus der Schallaustrittsfläche (5, 6) und der Prüflingsoberfläche (36) gebildeten Spaltraum (34, 35) gerichtet ist.

4. Verfahren nach Anspruch 3, dadurch gekennzeichnet, daß der Freistrahl in spitzem Winkel auf die Prüflingsoberfläche gerichtet ist.

5. Vorrichtung zur Ankopplung mindestens eines Ultraschallprüfkopfes (1, 2) an einem Prüfling (12) mittels eines flüssigen Koppelmediums bei der stückweisen automatischen Ultraschallschweißnahtprüfung von Rohren, bei der jeder Prüfkopf in eine Halteeinrichtung eingebaut und durch sie in konstantem Abstand zum Prüfling auf einer Prüfspur (42) geführt ist, wobei die Halteeinrichtung mit Hilfe von Schwingen (17–20) und Parallelogrammlenkern (25–28) vertikal verstellbar und an die Rohrabmessung anpaßbar ist und Aufgleiteinrichtungen (21–24) besitzt, dadurch gekennzeichnet, daß die Schallaustrittsfläche (5, 6) in Bezug auf die der Prüflingsoberfläche (36) zugewandten Unterseite (7, 8) der Halteeinrichtung (3, 4) erhaben ausgebildet ist und daß seitlich des Prüfkopfes (1, 2) eine zum Prüfkopf (1, 2) geneigte, nicht mit ihm in Verbindung stehende Freistrahleinrichtung (30, 31) für Koppelmedium mit einem quer zur Prüfspur (42) in einer die Mittelachse der Schallaustrittsfläche (5, 6) beinhaltenden Ebene austretenden und im wesentlichen auf den Spaltraum (34, 35) zwischen Schallaustrittsfläche (5, 6) des Prüfkopfs (1, 2) und Prüflingsoberfläche (36) gerichteten Freistrahl (32, 33) angeordnet ist, der im Betrieb der Vorrichtung die einzige Schicht aus Koppelmedium zwischen Schallaustrittsfläche (5, 6) und Prüflingsoberfläche (36) aufbaut.

6. Vorrichtung nach Anspruch 5, dadurch gekennzeichnet, daß die Freistrahleinrichtung (30, 31) als Schlitzdüse ausgebildet ist.

7. Vorrichtung nach Anspruch 5 oder 6, dadurch gekennzeichnet, daß eine Luftstrahleinrichtung oder mehrere Luftstrahleinrichtungen (37) im Bereich des Prüfkopfes (1, 2) auf den Freistrahl (31, 32), auf die Koppelmediumsschicht oder auf die Prüflingsoberfläche (36) gerichtet ist bzw. sind.

8. Vorrichtung nach Anspruch 5 bis 7, dadurch gekennzeichnet, daß die Freistrahleinrichtung in ihrer Neigung zum Prüfkopf so angeordnet ist, daß die Mittelachsen des Freistrahles und des Prüfkopfes einen Winkel zwischen 40° und 90° einschließen und ihr Schnittpunkt unterhalb der Werkstückoberfläche liegt.

## Claims

1. Process for coupling at least an ultrasonic test head (1, 2) onto a test specimen (12) by means of a coupling medium where strips, slabs or tubes are tested piece by piece automatically by ultrasound where the test head is guided at a constant distance from the test specimen along the test track (42) by means of a holding mechanism, characterised in that a single layer is built up from coupling medium in the gap (34, 35) between the sound outlet surface (5, 6) of the test head (1, 2) and the surface of the test specimen (36) with the aid of a separate free jet (32, 33) of the coupling medium formed and essentially aimed at the gap (34, 35) between the sound outlet surface (5, 6) of the test head and the surface of the test specimen (36) located on the side of the test head (1, 2), inclined with respect to the latter in a plane transverse to the test track (42) and containing the central axis of the sound outlet surface (5, 6) of the test head.

2. Process as in claim 1, characterised in that the free jet (32, 33) of the coupling medium and/or a coupling medium layer is or are delimited, guided or split by one or several air jets (38).

3. Process as in claim 1 or 2 characterised in that the free jet (32, 33) close to the surface of the test specimen (36) is guided next to the gap (34, 35) formed by the sound outlet surface (5, 6) and the surface of the test specimen (36).

4. Process as in claim 3, characterised in that the free jet is directed onto the surface of the test specimen at an acute angle.

5. Device for coupling at least one ultrasonic test head (1, 2) onto a test specimen (12) by means of a coupling medium when testing the welded seams of tubes by ultrasound piece by piece automatically, where each test head is built into a holding device and is guided by it at a constant distance from the test specimen along a test track (42) where the holding mechanism can be adjusted vertically with the aid of rocker arms (17–20) and parallelogram-shaped link mechanisms and can be adapted to the dimensions of the tube and is made with slide pads (21–24), characterised in that the sound outlet surface (5, 6) is designed in relief in relation to the underside (7, 8) of the holding mechanism (3, 4) facing the surface of the test specimen (36) and that a free jet device (30, 31) for coupling medium on the side of the test head (1, 2) inclined to the test head (1, 2) and not connected to it with a free jet (32, 33) emerging transverse to the test track (42) in a plane containing the central axis of the sound outlet surface (5, 6) and aimed essentially at the gap (34, 35) between the sound outlet surface (5, 6) of the test head (1, 2) and the surface of the test specimen (36), which when the device is operated forms the single layer from coupling medium between the sound outlet surface (5, 6) and the surface of the test specimen (36).

6. Device as in claim 5, characterised in that the free jet equipment (30, 31) is designed as split nozzle.

7. Device as in claim 5 or 6, characterised in that one air jet device or several air jet devices (37) in the area of the test head (1, 2) is or are aimed at the free jet (31, 32), at a coupling medium layer or at the surface of the test specimen (36).

8. Device as in claims 5 to 7 inclusive, characterised in that the free jet equipment that is inclined to the test head is arranged such that the central axis of the free jet and of the test head subtend an angle of between 40° and 90° and their point of intersection lies below the surface of the workpiece.

**Revendications**

1. Procédé pour le couplage d'au moins une tête (1, 2) de contrôle à ultrasons avec un objet à tester (12), au moyen d'un agent de couplage liquide, pour le contrôle automatique par ultrasons, pièce par pièce, de bandes, tables ou tubes, dans lequel la tête de contrôle est guidée au moyen d'un dispositif de support, à distance constante de l'objet à tester, sur une piste de contrôle (42), caractérisé en ce qu'un jet libre (32, 33), séparé, de l'agent de couplage, disposé latéralement par rapport à la tête de contrôle (1, 2), incliné vers celle-ci dans un plan transversal à la piste de contrôle (42) et comportant l'axe de la surface de sortie des ultrasons (5, 6) de la tête de contrôle, dirigé en substance vers l'interstice (34, 35) entre la surface de sortie des ultrasons de la tête de contrôle et la surface de l'objet à tester (36), forme la seule couche d'agent de couplage dans l'interstice (34, 35) entre la surface de sortie des ultrasons (5, 6) de la tête de contrôle et la surface de l'objet à tester (36).

2. Procédé selon la revendication 1, caractérisé en ce que le jet libre (32, 33) de l'agent de couplage et/ou une couche d'agent de couplage sont limités, guidés ou divisés au moyen d'un ou de plusieurs jets d'air (38).

3. Procédé selon la revendication 1 ou 2, caractérisé en ce que le jet libre (32, 33) est dirigé sur la surface de l'objet à tester (36) à proximité de l'interstice (34, 35) formé par la surface de sortie des ultrasons (5, 6) et la surface de l'objet à tester (36).

4. Procédé selon la revendication 3, caractérisé en ce que le jet libre est dirigé à angle aigu sur la surface de l'objet à tester.

5. Dispositif de couplage d'au moins une tête (1, 2) de contrôle à ultrasons avec un objet à tester (12), au moyen d'un agent de couplage liquide, pour le contrôle automatique de soudures de tubes par ultrasons, pièce par pièce, dans lequel chaque tête de contrôle est insérée dans un dispositif de support et est conduite à distance constante par rapport à l'objet à tester, sur une piste de contrôle (42), le dispositif de support étant réglable verticalement à l'aide de coulisses (17–20) et de bras en parallélogramme (25–28), et adaptable aux dimensions du tube, et possédant des dispositifs de glissement (21–24), caractérisé en ce que la surface de sortie des ultrasons (5, 6) est convexe par rapport à la face inférieure (7, 8) du dispositif de support (3, 4) tournée vers la surface de l'objet à tester (36) et en ce qu'il comprend, latéralement par rapport à la tête de contrôle (1, 2) un dispositif à jet libre (30, 31) pour l'agent de couplage, incliné vers la tête de contrôle (1, 2) et non reliée à elle, avec un jet libre (32, 33) sortant transversalement par rapport à la piste de contrôle (42) dans un plan comportant l'axe de la surface de sortie des ultrasons (5, 6) et dirigé essentiellement sur l'interstice (34, 35) entre la surface de sortie des ultrasons (5, 6) de la tête de contrôle (1, 2) et la surface de l'objet à tester (36), lequel produit, lors du fonctionnement du dispositif, la couche du milieu de couplage entre la surface de sortie des ultrasons (5, 6) et la surface de l'objet à tester (36).

6. Dispositif selon la revendication 5, caractérisé en ce que le dispositif à jet libre (30, 31) est configuré comme une buse à fente.

7. Dispositif selon la revendication 5 ou 6, caractérisé en ce qu'un ou plusieurs dispositifs à jet d'air (37) sont dirigés, au voisinage de la tête de contrôle (1, 2), sur le jet libre (31, 32), sur une couche d'agent de couplage, ou sur la surface de l'objet à tester (36).

8. Dispositif selon les revendications 5 à 7, caractérisé en ce que le dispositif à jet libre est disposé, dans son inclinaison par rapport à la tête de contrôle, de manière telle que les axes du jet libre et de la tête de contrôle forment un angle compris entre 40° et 90°, et que leur point d'intersection se situe sous la surface de la pièce.

EP 0 305 637 B1

*Fig. 1*

Fig. 2

EP 0 305 637 B1

*Fig. 3*